## Europäisches Patentamt
## European Patent Office
## Office européen des brevets

(19)

(11) Veröffentlichungsnummer : **0 318 664 B1**

(12) # EUROPÄISCHE PATENTSCHRIFT

(45) Veröffentlichungstag der Patentschrift :
03.07.91 Patentblatt 91/27

(51) Int. Cl.⁵ : **A01G 9/10**

(21) Anmeldenummer : **88116101.2**

(22) Anmeldetag : **29.09.88**

(54) **Pflanzenanzuchtkörper.**

(30) Priorität : 02.10.87 DE 3733805

(43) Veröffentlichungstag der Anmeldung :
07.06.89 Patentblatt 89/23

(45) Bekanntmachung des Hinweises auf die
Patenterteilung :
03.07.91 Patentblatt 91/27

(84) Benannte Vertragsstaaten :
BE CH DE ES FR GB IT LI NL SE

(56) Entgegenhaltungen :
FR-A- 2 143 965
GB-A- 737 660
US-A- 1 333 411
US-A- 3 835 584

(73) Patentinhaber : **Edm. Romberg & Sohn (GmbH
& Co.) KG
Werner-von-Siemens-Strasse 13
W-2086 Ellerau (DE)**

(72) Erfinder : **Schilling, Frank
Lohplatz 8a
W-2081 Alveslohe (DE)**

(74) Vertreter : **Patentanwälte Wenzel & Kalkoff
Grubes Allee 26 Postfach 730466
W-2000 Hamburg 73 (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen mindestens ein Pflanzenelement wie einen Pflanzensteckling, Sämling, Samen od.dgl. zum Zwecke der Bewurzelung aufnehmenden Pflanzenanzuchtkörper oder -ballen mit einem in diesem ausgebildeten Kanalsystem. Die Anzucht von Pflanzen mittels derartiger Körper oder Ballen ist dem Bereich des Gartenbaus zuzuordnen und wird in der Regel in großen hochqualifizierten Spezialbetrieben vorgenommen. In diesen werden mit großtechnischen oder industriellen Methoden Pflanzenstecklinge, Sämlinge oder Samen millionenfach in Anzuchtkörper gesteckt bzw. auf diese aufgebracht, wobei die Körper in nasser oder feuchter Umgebung gehalten werden. Die Anzuchtkörper sind speziell für die erste Bewurzelung des Stecklings, des Sämlings bzw. der Samen vorgesehen. Nachdem diese einen ausreichenden Bewurzelungsgrad erreicht haben, werden sie mit den bewurzelten Körpern oder Ballen an Produktionsbetriebe weitergegeben. Dort werden die Körper mit den bewurzelten Jungpflanzen zur weiteren Kultur entweder in Verkaufsgefäße wie Töpfe oder in Freiland gesetzt.

Bei bekannten Körpern der genannten Art für Pflanzenkulturen (DE-A-28 52 286, DE-A-28 27 524) muß das Substratmaterial zur Ausbildung des Kanalsystems mittels Stanzen, Fräsen, Bohren, Stecken oder Schneiden besonders mechanisch bearbeitet werden. Die Herstellung eines solchen einstückigen relativ massiven Körpers ist material- und arbeitsaufwendig und damit kostenintensiv. Die mechanische Bearbeitung führt zu relativ dicken Kanalwandungen, die ein verhältnismäßig großes Volumen des Substratmaterials belassen. Die bekannten Körper werden aufgrund ihrer Struktur und bei Verwendung herkömmlicher Substratmaterialien, insbesondere von vollsynthetischem Schaumstoff, vollständig mit Wasser gesättigt, so daß sich zur Anzucht ungeeignete und zu Fäulnis neigende Hydrowurzeln bilden.

Andere bekannte Pflanzenanzuchtkörper, die keine Kanäle aufweisen, bestehen aus Weichschaumstoff, einem Schaumstoff -Flockenverbund mit zur Aufnahme von Stecklingen oder Samen vorgesehenen Stanzschlitzen (DE-U- 69 365 48.6) oder aus einer Torf, Humus und Schaumstoffflocken umfassenden Substratmischung (DE-A-23 07 732). Die Poren- oder Zellenstruktur derartiger Anzuchtkörper führt bei Bewurzelung zu einem unzureichenden Luftaustausch von außen nach innen, d.h. von Zelle zu Zelle. Eine feinporige Struktur ist bei den bekannten Körpern jedoch erforderlich, um eine kapillare Wasserausbreitung zu ermöglichen. Dabei setzen sich die Poren bzw. die Struktur unter Luftabschluß gegenüber Wurzeln mit Wasser zu. Mangelnde Belüftung von Wurzeln führt zu deren Fäulnis und Wachstumsbehinderung. Aus Schaumstoffen bestehende Anzuchtkörper sind nicht kompostierbar.

Der Erfindung liegt die Aufgabe zugrunde, einen einfach handhabbaren Pflanzenanzuchtkörper zu schaffen, der besonders kostengünstig herstellbar ist und mit dessen Aufbau auf einfache Weise eine sterile sowie gleichbleibende, einer Vielzahl von Anwendungsfällen gerecht wer dende optimale Nährstruktur gewährleistet wird.

Diese Aufgabe wird in Verbindung mit den Merkmalen des eingangs genannten Pflanzenanzuchtkörpers dadurch gelöst, daß Kanäle durch eine Schichtung von im Profil wellenförmigen, Kanalwandungen bildenden und von Wurzeln durchdringbaren Wellenlagen ausgebildet sind.

Die Schichtung der Wellenlagen verleiht dem Gesamtkörper eine hohe Festigkeit und führt sehr einfach und kostengünstig zur Ausbildung von an Körperaußenflächen wenigstens einseitig offenen (Luft-)Kanälen, wobei insbesondere ein hoher Luftanteil des Gesamtkörpers im Verhältnis zu dem Materialanteil der Kanalwandungen erreichbar ist. Der Körper weist ein geringes Trockengewicht auf. Die Wellenlagen bilden aufeinanderfolgende Kanalschichten aus, die jeweils eine Gruppe wenigstens teilweise parallel ausgerichteter Luftkanäle aufweisen. In der Ebene einer jeden Kanalschicht kann eine vorrangige Wurzelausbreitung stattfinden. Durch Anzahl, Maß der Wellung und/oder Ausrichtung der aufeinanderfolgenden Wellenlagen kann je nach dem anzuzüchtenden Pflanzenelement auf einfache Weise eine gewünschte Wurzelstruktur gewonnen und/oder besonders ausgeprägt ausgebildet werden. Die Größe der Kanalquerschnitte ist durch das Maß der Wellungen der Wellenlagen und ggf. durch ein teilweises Eingreifen der Wellenlagen ineinander bestimmt. Durch die luftige, eine Zwangsbelüftung gewährleistende Wellen-Kanalstruktur ist eine stauende, mit Luftausschluß einhergehende Nässe vermieden, die zu Fäulnis von Pflanzenelement-Wurzeln führen würde. Mit den stapelartig geschichteten Wellenlagen ist ein besonders raum- und materialsparender Aufbau des Körpers erreicht, der im Gegensatz zu den bekannten gattungsgemäßen Anzuchtkörpern eine unerwünschte Wassersättigung selbst dann vermeidet, wenn der Körper vorübergehend in Wasser gebracht oder überwässert wird. Der Wurzelwuchs erfolgt bevorzugt innerhalb der mit Feuchtigkeit gesättigten Kanalluft, wobei Wurzeln in Wellenlagen eindringen und durch diese unter Eintritt in einen nächsten Kanal hindurchwachsen. Insbesondere können sich Wurzeln auch leicht zwischen zwei benachbarten aneinanderliegenden Wellenlagen quer zur Längserstreckung der Wellen ausbreiten. In dem erfindungsgemäßen Anzuchtkörper bilden sich dünne und verästelte Wurzeln aus, die als Erdwurzeln besonders gut zur anschließenden Fortpflanzung in Erdbereichen geeignet sind. Die Körperstruktur gewährleistet gleichbleibende Wachstumsbedingungen, eine unveränderte Materialbeschaffenheit des Körpers und Sterilität. Erfordernisse für Anzuchtkörper bestehen insbesondere in leichter, aber dosierter Wasseraufnahme, einer über längeren Zeitraum Feuchtigkeit haltenden Struktur, einem die Körper-Durchwurzelung begünstigenden Nährmedium, ausreichender Belüftung der Wurzel sowie – damit im Zusammenhang stehend – einem geeigneten stabilen Verhältnis zwischen Luft- und Wasserraumteilen, einer einzuhaltenden gleichbleibenden Substratqualität, einzuhaltender Sterilität des Körpermaterials, Verwendung von kostengünstig zur Verfügung stehendem Körpermaterial, einer guten Standeigenschaft des Körpers auf Anzucht-Gewächshaustischen oder dgl. sowie der Vermeidung von hohem Gewicht der Körper. Durch die erfindungsgemäße Körpergestaltung sind sämtliche dieser Ziele erreicht.

In besonderer Ausgestaltung der Erfindung bestehen die Kanalwandungen wenigstens teilweise aus einem Flüssigkeit ansaugenden Kapillarmaterial, das zu einem sehr günstigen Feuchtigkeitshaushalt der Körperstruktur mit gleichmäßiger Wasserhaltung beiträgt. Die Kanalwandungen können im Verhältnis zum Kanaldurchmesser sehr dünn ausgebildet sein, wobei sie aufgrund der Stabilität gewährleistenden Wellenlagenstruktur vorzugsweise aus einem weichen Material mit guter Kapillarwirkung bestehen.

Wellen benachbarter Lagen mit gleichen Wellenphasen können entlang parallel zueinander angeordneter Wellentäler bzw. Wellenberge aneinanderliegen bzw. in geeigneter Weise wie z.B. durch Klebung, Heftung oder Umspannung des Körpers mit einem Haltemittel aneinandergefügt sein, um maximale Kanalquerschnitte zu erzielen. Die beispielhaft erwähnten Fixierungsmaßnahmen können ganz allgemein zum Zusammenhalten der Schichtung eines erfindungsgemäßen Körpers vorgesehen sein.

Benachbarte Wellenlagen mit fluchtenden Wellen können zweckmäßig auch in der Wellenphase verschoben und damit zueinander parallel versetzt angeordnet sein, so daß mit gleichen Wellenlagen verschiedene Kanalquerschnitte gewünschter Größe vorgesehen werden können. Zur Vorgabe einer gewünschten Kanalstruktur bzw. -größe können ein und dieselbe Wellenlage und/oder benachbarte Wellenlagen insbesondere mit miteinander fluchtenden Wellen auch verschiedene Wellenphasen aufweisen. In jedem Fall erreicht man mit einem Wellenphasenunterschied bzw. mit dem Maß des Versatzes einen mehr oder weniger ausgeprägten zahnartigen Eingriff benachbarter Wellenlagen ineinander, so daß ein gewünschtes Kanalvolumen sehr einfach realisierbar und der Struktur zudem eine besondere Festigkeit verliehen ist.

Ein Vorteil der Wellenschichtstruktur des Anzuchtkörpers besteht darin, daß auf einfache Weise über den ganzen Körper Lagen mit gleich ausgerichteten Kanälen ausbildbar sind. Wellenlagen können aber ebenso vorteilhaft mit ihren Wellenrichtungen auch gegeneinander, insbesondere wechselweise um einen 90°– Winkel, gedreht angeordnet sein, so daß dann in benachbarten Wellenlagen verschiedene Kanalausrichtungen von ggf. offen miteinander in Verbindung stehenden Kanälen vorgesehen sind, wodurch dem Wurzelwuchs auf einfache Weise ein gewünschter räumlicher Ausbreitungsbereich und/oder eine gewünschte Wuchsrichtung vorgegeben werden kann.

Gemäß einer besonderen erfindungsgemäßen Gestaltung ist die Schichtung des Körpers mit Wellenlagen aus mindestens einem an gegenüberliegenden Körperflächen leporello- oder ziehharmonikaartig um 180° umgefalteten einstükigen Wellenmaterialzuschnitt wie einer Wellenmaterialbahn gebildet. Ein solcher Körper ist besonders einfach herstellbar. Insbesondere ist es vorteilhaft, daß nur die Material- oder Fabrikkante am Anfang bzw. Ende einer in die Körperform gefalteten Wellenmaterialbahn durch z.B. Klebung oder Heftung fixiert zu werden braucht, um die Lagen des Körpers ausreichend fest aneinander zu halten. Zweckmäßig liegen die Faltlinien parallel zu Wellenbergen bzw. -tälern. Durch Ineinanderschachtelung von zwei leporelloartig umgefalteten, unter insbesondere einem Winkel von 90° quer zueinander liegenden Bahnen ist ein Körper mit quer bzw. insbesondere senkrecht zueinanderliegenden Wellenrichtungen benachbarter Wellenlagen erreicht.

Eine besondere Ausbildung der Erfindung besteht darin, daß zwischen benachbarten Wellenlagen mindestens eine diese flächig abdeckende, Kanalwandungen bildende, im wesentlichen plan liegende Decklage angeordnet ist. Infolge der stapelartig geschichteten Struktur des Körpers können benachbarte Wellenlagen mittels einer gemeinsamen Decklage aneinanderliegen. Damit erreicht man einen besonders einfachen, materialsparenden und besondere Stabilität gewährleistenden Aufbau. Die Deckenlagen bestehen aus einem von Wurzeln durchdringbaren Material.

Besonders vorteilhaft ist es, die Kanalwandungen oder Lagen aus einem weichen und/oder schwammigen Zellulose- oder Holzschliffpapier zu bilden. Insbesondere eignet sich Schrenzpapier, das als Abfallprodukt kostengünstig zur Verfügung steht. Mit dem Aufbau des Körpers aus Papierlagen erreicht man sehr vorteilhaft auch ein biologisch abbaubares, recyclingfähiges und/oder kompostierbares Produkt, so daß eine umweltfreundliche Beseitigung gewährleistet ist. Die genannten Papiere eignen sich besonders gut zur Herstellung der erfindungsgemäßen Struktur, indem, wie an sich aus der Wellpappindustrie bekannt, die Wellenschichten in Form von Wellpappschichten ausbildbar sind. Zur Herstellung der Papier-Körper kann eine ein- oder mehrlagige, ggf. Deck- oder Zwischenlagen umfassende Wellenbahn verwendet werden, die insbesondere auch – wie vorstehend beschrieben – leporelloartig zusammengelegt sein kann. Auch können aus einer Materialbahn bzw. einem Materialbahnverbund mehrere Pflanzenzuchtkörper oder -blöcke in gewünschter Gestalt ausgestanzt oder ausgeschnitten werden. Die genannten Papierlagen haben den Vorteil, daß sie sehr weiche und-/oder sehr dünne Kanalwandungen mit hervorragender Kapillareigenschaft bilden.

Hinsichtlich sehr raumsparender Handhabbarkeit und besonders guter Transportmöglichkeit besteht eine sehr vorteilhafte Ausgestaltung der Erfindung darin, daß die Kanalwandungen oder Wellenlagen so angeordnet und ausgebildet sind, daß der Körper unter Reduzierung der Kanalquerschnitte in eine flache Form zusammendrückbar ist, wobei die Wellenlagen aus einem Material bestehen, das aufgrund ihm insbesondere nur im feuchten Zustand immanenter Feder- und Rückstellkraft unter Ausbildung der Kanäle aufrichtbar ist. Es ist auf sehr einfache Weise erreicht, daß der Körper in trockenem Zustand für den Transport auf einen Bruchteil seiner eigentlichen Höhe flachförmig zusammenpreßbar ist, worauf er sich ggf. gezielt unter Feuchtigkeitseinwirkung wieder zu seiner ursprünglichen Gestalt auffaltet und ausdehnt, so daß er dann die zu bewurzelnden Pflanzenelemente aufnehmen kann.

Eine weitere Ausgestaltung der Erfindung besteht darin, daß die Wellenlagen senkrecht zur Vertikalausrichtung des Körpers liegend aufeinanderfolgend geschichtet sind. Damit erhält man eine Sandwich-Struktur mit horizontal liegenden Kanalschichten. Die Wurzeln werden gezwungen, sich aufgrund geringen Widerstandes und hoher Luftfeuchtigkeit in den Kanälen in Randbereiche des Körpers hinein und nach Durchdringen von Wellen- bzw. Decklagen Schicht für Schicht horizontal auszubreiten. So ist auf sehr wirksame Weise die Ausbildung von für eine Erdbepflanzung ungeeigneten, an sich in feuchtem Milieu entstehenden Pfahl- oder Hydrowurzeln eingeschränkt. Selbst dann, wenn der Pflanzenanzuchtkörper teilweise in Wasser steht, treten im Gegensatz zu auch insoweit ungünstigen Eigenschaften herkömmlicher Anzuchtkörper keine nachteiligen Folgen einer Überwässerung auf. Die Pflanzenwurzeln verästeln und verzweigen unter Vermeidung von Pfahlwurzeln auch horizontal.

Kanäle eines erfindungsgemäßen Anzuchtkörpers können wenigstens teilweise mit einem die Bewurzelung fördernden Anzuchtmaterial wie Erde, Torf oder dgl. gefüllt sein. Es hat sich herausgestellt, daß eine derartige besondere Materialstruktur zur Anzucht von bestimmten Pflanzen, die über einen längeren Zeitraum nicht gegossen werden dürfen, besonders günstig ist. Das Anzuchtmaterial fördert den Wurzelwuchs in den Kanälen, wobei aber zudem die mit Wellenlagen geschichtete Kanalstruktur für einen verzweigenden und sich verästelnden Wurzelwuchs über den gesamten Raumbereich des Anzuchtkörpers sorgt.

In Anzuchtkörper mit relativ dünnen und/oder weichen Wellenlagen können Stecklinge, Samen oder auch Sämlinge zerstörungsfrei von geschlossenen Schicht- bzw. Körperaußenflächen eingebracht werden. An einer Körperoberseite kann aber auch auf einfache Weise eine Aufnahme für ein Pflanzenelement ausgebildet sein. Insbesondere ist dafür eine in den Körper eingebrachte Bohrung oder vertikale Aufnahme-Schlitzstanzung vorgesehen. Besonders vorteilhaft ist es, die Schlitzstanzung als Kreuzschlitzstanzung auszubilden. Diese hat sich als besonders zweckmäßig erwiesen, wenn ein Steckling senkrecht zu Kanal- bzw. Wellenlagen in den Körper gesteckt werden soll. Infolge der erfindungsgemäßen Struktur des Körpers ist erreicht, daß die Schlitzstanzung zerstörungsfrei Stecklinge sehr unterschiedlicher Stengeldicke einführbar macht, wobei an der Oberfläche durch die Kreuzschlitzstanzung gebildete Lappen in dem erforderlichen Maß elastisch nach innen ausweichen und so den Steckling sicher fixieren. Aber auch Kanäle können bei entsprechender Ausrichtung des Körpers zur Steckling-, Samen- oder Sämlingaufnahme dienen.

Nach einer weiteren Ausgestaltung der Erfindung können unabhängig von den durch die Wellenlagen gebildeten Kanälen von der Körperoberseite ausgehende, im wesentlichen vertikal in denselben sich erstreckende, um einen Einsteck- oder Aufnahmebereich eines Pflanzenelements herum angeordnete Schlitzstanzungen oder Bohrungen zur zusätzlichen Wurzelführung ausgebildet sein. Diese sind besonders bei einem Anzuchtkörper mit horizontal liegenden Wellenlagen bzw. Kanälen zur Erleichterung einer vertikalen Bewurzelung zweckmäßig. So können insbesondere schwach wurzelnde Samen, Steck- oder Sämlinge begünstigt nicht nur horizontal, sondern auch vertikal wachsen.

Der erfindungsgemäße Anzuchtkörper kann aufgrund seines einfachen Aufbaus praktisch in jeder Form ausgebildet werden. Besonders zweckmäßig ist es, daß der Körper eine quader-, säulen-, oder zylinder- und-/oder prismenförmige Gestalt mit einer der Pflanzenelement-Aufnahmeseite gegenüberliegenden Standfläche aufweist. Damit können die Körper auf einfache Weise in großer Zahl auf Gewächshaustischen und/oder sie tragenden Bahnen angeordnet werden.

Weitere Vorteile und Ausführungsformen der Erfindung gehen aus der folgenden Beschreibung der in der schematischen Zeichnung dargestellten Ausführungsbeispiele hervor. Es zeigen

| | |
|---|---|
| Fig. 1 | einen erfindungsgemäßen Pflanzenanzuchtkörper mit Decklagen, |
| Fig. 2 | die Anordnung von Schlitzen in einem erfindungsgemäßen Anzuchtkörper, |
| Fig. 3 | in Schnittdarstellung einen mit Steckling versehenen erfindungsgemäßen Anzuchtkörper, |
| Fig. 4 und 5 | Anordnungen von Wellenlagen erfindungsgemäßer Anzuchtkörper und |
| Fig. 6 | einen erfindungsgemäßen Anzuchtkörper mit unmittelbar aneinanderliegenden Wellenlagen. |

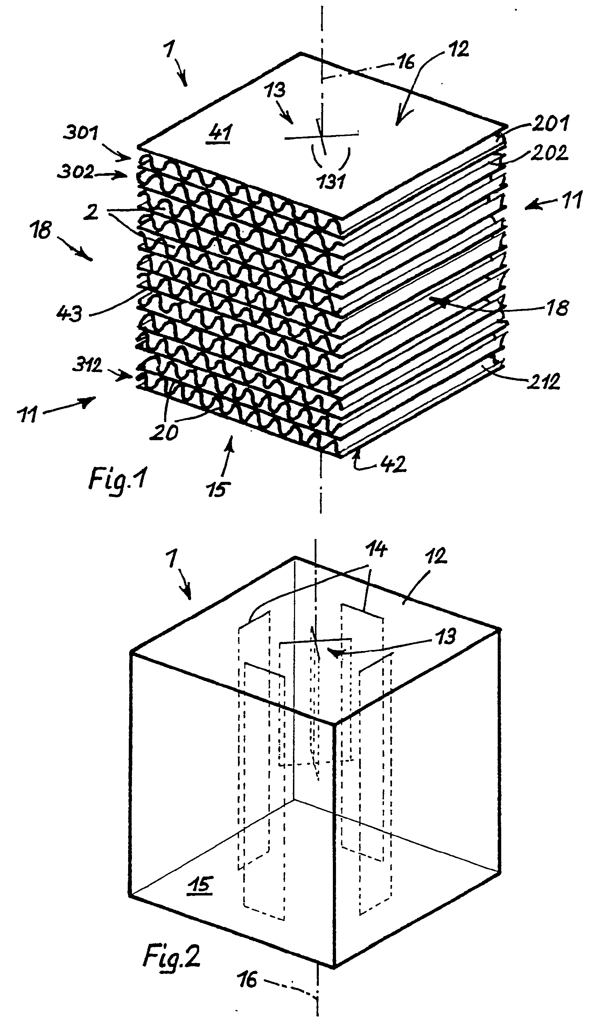

Ein in Fig. 1 dargestellter Pflanzenanzuchtkörper 1 umfaßt senkrecht zur Körperachse 16 im Stapel horizontal geschichtete, aus Wellenlagen 201 bis 212 gebildete Kanalschichten oder -gruppen 301 bis 312. Die Wellenlagen sind mit plan liegenden Zwischen- oder Decklagen 41, 42 bzw. 43 abgedeckt und vorteilhaft durch einen wasserunlöslichen Kleber mit diesen ggf. nur punktuell verbunden. Benachbarte Wellenlagen sind jeweils durch die gemeinsame Decklage 43 miteinander verbunden. Es ist ein mehrschichtiger, z.B. mehrere Zentimeter hoher Block erreicht. Mit jeder Wellenlage ist jeweils die Gruppe 301, 302...bzw. 312 parallel liegender Kanäle 2 gebildet. Jeder Luftkanal 2 ist an Körperaußenflächen 11 offen und zwischen diesen durchgängig. Die Wellenlagen 201 bis 212 sind so ausgerichtet, daß sämtliche Kanäle 2 in die gleiche Richtung laufen.

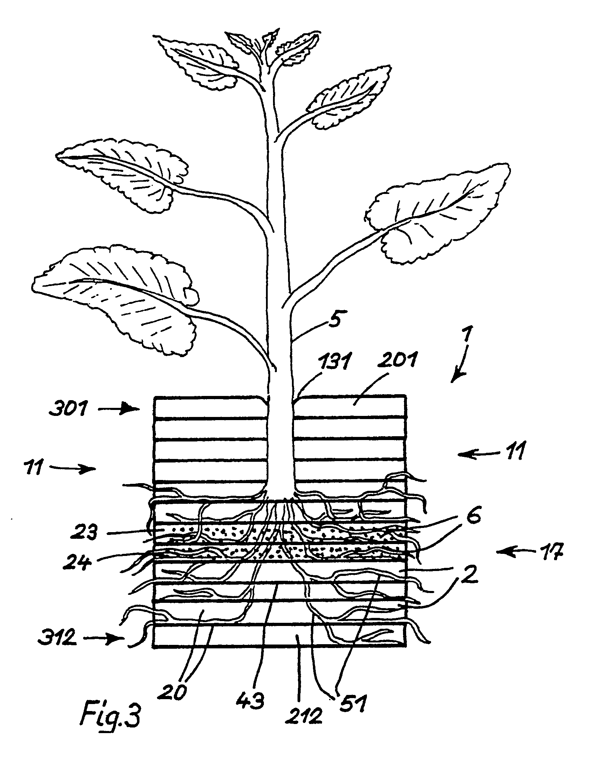

Die Decklagen 41, 42 und 43 sowie die Wellagen 201 bis 212 bestehen aus einem weichen schwammigen Zellulose- oder Holzschliffpapier, insbesondere aus einem als Recyclingmaterial zur Verfügung stehenden Schrenzpapier. Diese Papierlagen, die im Verbund eine Flüssigkeit ansaugende, von Wurzeln 51 (Fig. 3) durchdringbare Kapillarmaterialstruktur bilden, stellen Wandungen 20 der Kanäle 2 dar. Die Wellenlagen 201 bis 212 bestehen vorteilhaft aus einem Material mit ihm immanenter, ggf. nur unter Feuchtigkeitseinwirkung entstehender Feder- und damit Rückstellkraft, so daß ein (nicht dargestellter) flach zusammengelegter Körper unter Wirkung der Rückstellkraft aufgefaltet wird. Die Wellenform der Lagen 201 bis 212 eignet sich besonders gut zur Erzeugung der Material-Rückstellkraft.

Von der Oberseite 12 des Körpers 1 ausgehend ist eine für einen Steckling 5 (Fig. 3) als Aufnahme dienende, bis in einen Wuchsbereich 17 eingebrachte Kreuzschlitzstanzung 13 mit fixierenden Einstecklappen 131 längs der Körperachse 16 gestanzt. In diese sind Stecklinge unterschiedlicher Stengeldicke bis in den gewünschten Wuchsbereich 17 von anzuzüchtenden Wurzeln 51 einsteckbar.

Durch das mit den Wellenlagen 201 bis 212 gebildete Kanalsystem der Kanalgruppen 301 bis 312 werden die Wurzeln 51 des feucht gehaltenen Anzuchtkörpers 1 gezwungen, sich in Richtungen der eine hohe Luftfeuchtigkeit aufweisenden Kanäle 2 in Randbereiche des Körpers 1 auszubreiten. Dabei erfolgt ebenfalls ein Durchdringen der Wandungen 20 der Wellenlagen und der Decklagen 41, 42 bzw. 43, wie dies in Fig. 3 dargestellt ist. So breiten sich die Wurzeln Schicht für Schicht horizontal und vertikal aus.

In den (ohne Kanalsystem dargestellten) Körper gemäß Fig. 2 sind von der Oberseite 12 des Körpers 1 ausgehende, vertikal bis in den Bodenbereich sich erstreckende Schlitzstanzungen 14 vorgesehen, die bei einer Fig. 1 entsprechenden Ausführungsform vorzugsweise in Randbereichen des Körpers vorgesehen sind. Diese Stanzungen 14 sind um die Kreuzschlitzstanzung 13 herum gruppiert. Sie dienen einer besonders günstigen vertikalen Wurzelführung von insbesondere schwachen Wurzeln, die sich zunächst in horizontaler Richtung ausbreiten.

Die Unterseite des Körpers 1 bildet eine Standfläche 15. Der Körper 1 kann je nach Art der gewünschten Kanalausrichtung auch auf eine Fläche 11 oder eine Außenfläche 18 gestellt werden. Soweit gewünscht, werden an der gegenüberliegenden Oberseite des Körpers 1 Aufnahmen für ein Pflanzenelement, insbesondere in Form des beschriebenen Kreuzschlitzes ausgebildet. Besonders vorteilhaft ist es, daß – wie insbesondere aus Fig. 1 ersichtlich – bereits eine strukturierte Körperseite 18 bzw. eine Kanalöffnungen aufweisende Seite 11 Ausnehmungen oder Mulden bzw. Einstecköffnungen bildet.

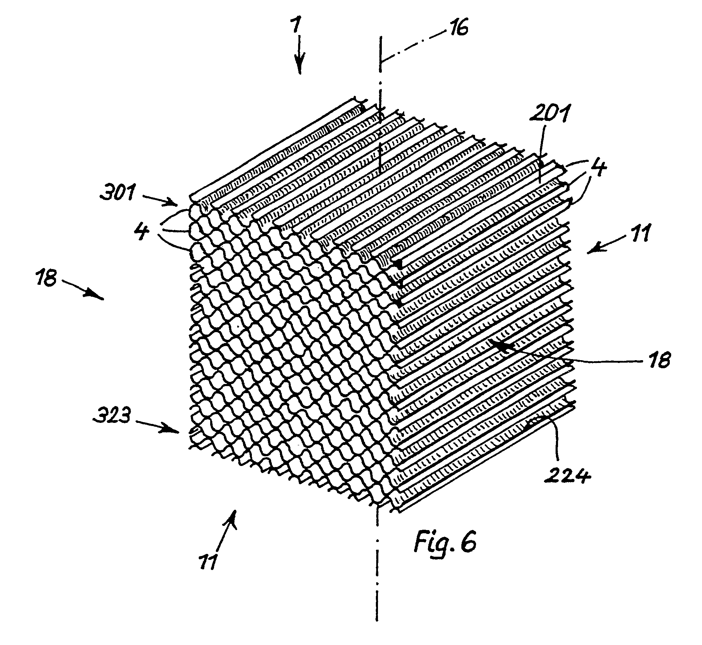

Es ist ersichtlich, daß der in Fig. 1 dargestellte Körper hinsichtlich einer anderen Kanalausrichtung von benachbarten bzw. verschiedenen Kanalgruppen leicht abgewandelt werden kann. So können gemäß Fig. 5 Kanalgruppen 301 bis 304 benachbarter Wellenlagen insbesondere unter einem Winkel von 90° zueinander verlaufen, indem benachbarte Lagen um die Achse 16 gegeneinander gedreht angeordnet sind.

Ein erfindungsgemäßer Pflanzenzuchtkörper 1 mit miteinander fluchtenden Wellen gemäß Fig. 6 ist im Unterschied zu dem anhand von Fig. 1 beschriebenen Anzuchtkörper ohne Decklagen mit direkt aneinander liegenden Wellenlagen 201 bis 224 ausgebildet. Diese weisen die gleiche Wellenphase auf. Die Wellen benachbarter Lagen sind entlang parallel zueinander angeordneter Wellentäler bzw. Wellenberge z.B. durch Klebung mit einem wasserunlöslichen Kleber aneinander fixiert. Auf diese Weise sind Kanalschichten oder -gruppen 301 bis 323 ausgebildet, die an den Körperaußenflächen 11 eine wabenförmige Struktur zeigen.

Ausführungsformen der Erfindung bestehen insbesondere auch darin, daß miteinander fluchtende Wellenlagen gleicher Wellenphase bezüglich dieser zueinander versetzt angeordnet sind, so daß die Kanalquerschnitte entsprechend der Phasenverschiebung kleiner sind. Dabei greifen die Wellen benachbarter Lagen zahnartig teilweise ineinander ein.

Erfindungsgemäße Anzuchtkörper gemäß Fig. 1, 3 und 6 können vorteilhaft aus einem an gegenüberliegenden Körperflächen 18 leporello- oder ziehharmonikaartig um 180° umgefalteten einstückigen Wellenmaterialzuschnitt wie einer Materialbahn aus Wellpappe gebildet sein. In Fig. 6 ist eine derart gefaltete Materialbahn lediglich durch mit 4 bezeichnete Übergänge oder Stege dargestellt.

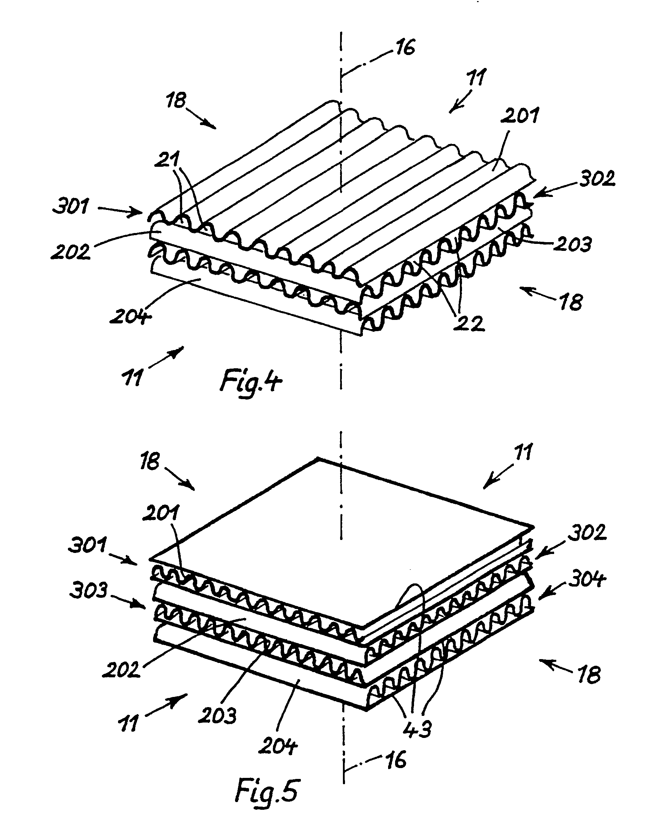

Fig. 4 zeigt ausschnittsweise vier Wellenlagen 201 bis 204 eines erfindungsgemäßen Anzuchtkörpers, bei dem die Wellenrichtungen von benachbarten Wellenlagen 201/202, 202/203 bzw. 203/204 kreuzweise unter einem Winkel von 90° zueinander gerichtet sind. Dabei liegen die Wellenlagen direkt aneinander, d.h., daß sie ohne die Anordnung von Zwischen- bzw. Decklagen miteinander z.B. durch Klebefixierung oder durch ein den Gesamtkörper umgebendes Haltemittel wie ein Band oder eine dünne Umwicklung, die von Wurzeln durchdringbar ist, aneinandergefügt sind. Die Struktur gemäß Fig. 4 umfaßt zwischen zwei benachbarten Wellenlagen (z.B. 201 und 202) Kanalschichten (z.B. 301 und 302), die rechtwinklig zueinander verlaufende Kanäle 21 und 22 aufweisen, wobei diese Kanäle offen miteinander verbunden sind. Auf diese Weise können Wurzeln in Kanälen 21 und 22 verzweigen, ohne daß sie eine Kanalwandung durchdringen müssen.

Körper mit gemäß Fig. 4 und Fig. 5 angeordneten Wellenlagen können vorteilhaft durch eine ineinander geschachtelte Faltung von zwei leporelloartig unter einem Winkel von 90° zueinander liegenden Wellenbahnen gebildet sein. Die Lagen 201 und 203 bzw. 202 und 204 sind bei derart ausgebildeten Körpern im Bereich der Körperaußenflächen 18 bzw. 11 über jeweils eine (in Fig. 4 und 5 nicht dargestellte) Falzbrücke miteinander verbunden.

Vorteilhaft können erfindungsgemäße Pflanzenanzuchtkörper auch aus vorkonfektionierten Platten, die mehrere Wellenlagen umfassen, zu Blöcken bzw. Körpern gewünschter Größe und Form ausgestanzt oder geschnitten sein.

In Fig. 3 sind beispielhaft Kanäle 23 und 24 dargestellt, die mit einem die Bewurzelung fördernden Anzuchtmaterial 6 wie Erde, Torf od.dgl. gefüllt sind. Durch diese Maßnahme wird bei bestimmten Pflanzenarten der Wurzelwuchs im Bereich der Kanäle begünstigt, während aber zudem durch die Kanalwandungen hindurch auch eine feine Verästelung der Wurzeln in vertikaler Richtung stattfindet.

## Ansprüche

1. Mindestens ein Pflanzenelement (5) wie einen Pflanzenstecking, eine Wurzel, einen Sämling, Samen od.dgl. zum Zwecke der Bewurzelung aufnehmender Pflanzenanzuchtkörper (1) mit einem in diesem ausgebildeten Kanalsystem, **dadurch gekennzeichnet,** daß Kanäle (2) durch eine Schichtung von im Profil wellenförmigen, Kanalwandungen (20) bildenden und von Wurzeln durchdringbaren Wellenlagen (201...212) ausgebildet sind.

2. Pflanzenanzuchtkörper nach Anspruch 1, **dadurch gekennzeichnet,** daß Kanalwandungen (20) wenigstens teilweise aus einem Flüssigkeit ansaugenden Kapillarmaterial bestehen.

3. Pflanzenanzuchtkörper nach Anspruch 1 oder 2, **dadurch gekennzeichnet,** daß benachbarte Wellenlagen in der Wellenphase verschoben und damit zueinander versetzt angeordnet sind.

4. Pflanzenanzuchtkörper nach einem der Ansprüche 1 bis 3, **dadurch gekennzeichnet,** daß ein und dieselbe Wellenlage oder benachbarte Wellenlagen benachbarter Schichten verschiedene Wellenphasen aufweisen.

5. Pflanzenanzuchtkörper nach einem der Ansprüche 1 bis 4, **dadurch gekennzeichnet,** daß Wellenrichtungen von benachbarten Wellenlagen (201/202...) quer oder kreuzweise insbesondere unter einem Winkel von 90° zueinander liegen.

6. Pflanzenanzuchtkörper nach einem der Ansprüche 1 bis 5, **dadurch gekennzeichnet,** daß die Schichtung des Körpers (1) mit Wellenlagen (201...212) aus mindestens einem an gegenüberliegenden Körperflächen (18 ; 11) leporello oder ziehhar- monikaartig um 180° umgefalteten einstückigen Wellenmaterialzuschnitt wie einer Wellenmaterialbahn gebildet ist.

7. Pflanzenanzuchtkörper nach einem der Ansprüche 1 bis 6, **dadurch gekennzeichnet,** daß zwischen benachbarten Wellenlagen (201/202...) mindestens eine diese flächig abdeckende, Kanalwandungen (20) bildende, im wesentlichen plan liegende Decklage (43) angeordnet ist.

8. Pflanzenanzuchtkörper nach einem der Ansprüche 1 bis 7, **dadurch gekennzeichnet,** daß die Kanalwandungen (20) im Verhältnis zu Querschnitten der Kanäle (2) dünn sind.

9. Pflanzenanzuchtkörper nach einem der Ansprüche 1 bis 8, **dadurch gekennzeichnet,** daß die Kanalwandungen (20) bzw. Lagen (201...212 ; 41 bis 43) aus einem weichen schwammigen Zellulose- oder Holzschliffpapier bestehen.

10. Pflanzenanzuchtkörper nach einem der Ansprüche 1 bis 9, **dadurch gekennzeichnet,** daß die Wellenlagen (201...212) so angeordnet und ausgebildet sind, daß der Körper (1) unter Reduzierung der Kanalquerschnitte eine flache Form aufweist, wobei die Wellenlagen aus einem Material bestehen, das aufgrund diesem insbesondere nur im feuchten Zustand immanenter Feder- und Rückstellkraft unter Ausbildung der Kanäle (2) aufrichtbar ist.

11. Pflanzenanzuchtkörper nach einem der Ansprüche 1 bis 10, **dadurch gekennzeichnet,** daß die Kanalwandungen (20) aus einem unter Feuchtigkeit aufquellenden Material bestehen.

12. Pflanzenanzuchtkörper nach einem der Ansprüche 1 bis 11, **dadurch gekennzeichnet,** daß die Wellenlagen (201...212) senkrecht zur Vertikalausrichtung (16) des Körpers (1) liegend aufeinanderfolgen bzw. geschichtet sind.

13. Pflanzenanzuchtkörper nach einem der Ansprüche 1 bis 12, **dadurch gekennzeichnet,** daß die Kanäle (2) wenigstens teilweise mit einem die Bewurzelung fördernden Anzuchtmaterial (6) wie Erde, Torf od.dgl. gefüllt sind.

14. Pflanzenanzuchtkörper nach einem der Ansprüche 1 bis 13, **dadurch gekennzeichnet,** daß von einer zur Aufnahme des Pflanzenelements (5) vorgesehenen Körperseite (12) ausgehende, im wesentlichen vertikal in den Körper (1) sich erstreckende Schlitzstanzungen (13, 14) oder Bohrungen ausgebildet sind.

## Claims

1. Plant cultivation body (1), adapted to receive at least one plant element (5) such as a cutting, root, seedling, seed, etc. for rooting purposes and with a channel system formed therein, **characterized in** that channels (2) are formed by a stacking of profile-wavy corrugated layers (201 to 212) which define channel walls (20) and can be penetrated by roots.

2. Plant cultivation body according to claim 1, **characterized in** that the channel walls (20) at least partly comprise liquid-sucking capillary material.

3. Plant cultivation body according to claims 1 or 2, **characterized in** that adjacent corrugated layers are displaced in the corrugation phase and are consequently reciprocally offset.

4. Plant cultivation body according to any one of the claims 1 to 3, **characterized in** that same or adjacent corrugated layers have different corrugation phases.

5. Plant cultivation body according to any one of the claims 1 to 4, **characterized in** that the corrugation directions of adjacent corrugated layers (201/202 etc.) are arranged transverse or crosswise and in particular under an angle of 90° to one another.

6. Plant cultivation body according to any one of the claims 1 to 5, **characterized in** that the layer stacking of the body (1) with corrugated layers (201 to 212) is formed by at least one one-piece corrugated material blank, such as a corrugated material web folded over in leporello or concertina-like manner by 180° on facing body surfaces (18 ; 11).

7. Plant cultivation body according to any one of the claims 1 to 6, **characterized in** that between adjacent corrugated layers (201/202 etc.) is arranged at least one substantially planar covering layer (43) covering the same in flat manner and forming channel walls (20).

8. Plant cultivation body according to any one of the claims 1 to 7, **characterized in** that the channel walls (20) are thin compared with the cross-sections of the channels (2).

9. Plant cultivation body according to any one of the claims 1 to 8, **characterized in** that the channel walls (20) or layers (201 to 212 ; 41 to 43) are made from a soft spongy cellulose or groundwood paper.

10. Plant cultivation body according to any one of the claims 1 to 9, **characterized in** that the corrugated layers (201 to 212) are so arranged and constructed that, accompanied by the reduction of the channel cross-sections, the body (1) has a flat shape, the corrugated layers being made from a material which can be uprighted as a result of an immanent elastic force and resilience, in particular only in the moist state whilst forming the channels (2).

11. Plant cultivation body according to any one of the claims 1 to 10, **characterized in** that the channel walls (20) are made from a material swelling under moisture action.

12. Plant cultivation body according to any one of the claims 1 to 11, **characterized in** that the corrugated layers (201 to 212) follow one another or are stacked perpendicularly to the vertical orientation (16) of body (1).

13. Plant cultivation body according to any one of claims 1 to 12, **characterized in** that the channels (2) are at least partly filled with a growth material (6) such as soil, peat, etc. which encourages rooting.

14. Plant cultivation body according to any one of claims 1 to 13, **characterized in** that punched slots or holes (13, 14) extending su stantially vertically into the body (1) from the top surface (12) thereof are formed, the top surface being provided for the reception of the plant element (5).

## Revendications

1. Structure (1) pour la culture des plantes, pouvant recevoir au moins un élément végétal (5), comme par exemple une bouture, une racine, une semence ou analogue, pour en assurer l'enracinement, avec un système de canaux aménagés dans son volume intérieur, caractérisé en ce que les canaux (2) sont réalisés par un empilement de couches ondulées (201...212), ayant en profil la forme d'une ondulation, formant les parois (20) des canaux et pouvant être traversées par les racines.

2. Structure pour la culture des plantes selon la revendication 1, caractérisée en ce que les parois (20) des canaux sont, au moins partiellement, en un matériau capillaire pouvant absorber les liquides.

3. Structure pour la culture des plantes selon la revendication 1 ou 2, caractérisée en ce que des couches ondulées voisines ont des phases d'ondulation décalées et sont donc décalées les unes par rapport aux autres.

4. Structure pour la culture des plantes selon l'une des revendications 1 à 3, caractérisée en ce qu'une seule et même couche ondulée, ou encore des couches ondulées voisines de groupes voisins, présentent des phases d'ondulation différentes.

5. Structure pour la culture des plantes selon l'une des revendications 1 à 4, caractérisée en ce que les directions d'ondulation de couches ondulées voisines (201/202...), sont transversales les unes aux autres ou se croisent, en particulier sous un angle de 90°.

6. Structure pour la culture des plantes selon l'une des revendications 1 à 5, caractérisée en ce que l'empilement de la structure (1), avec les couches ondulées (201...212) est constitué d'un morceau unique de matériau ondulé, par exemple une feuille continue ondulée, repliée de 180°, en accordéon, sur les surfaces opposées (18 ; 11) de la structure.

7. Structure pour la culture des plantes selon l'une des revendications 1 à 6, caractérisée en ce qu'entre des couches ondulées voisines (201/202...) est disposée au moins une couche de couverture (43), essentiellement plane, recouvrant complètement les couches ondulées et formant des parois (20) de canaux.

8. Structure pour la culture des plantes selon l'une des revendications 1 à 7, caractérisée en ce que les parois (20) des canaux sont minces par rapport à la section transversale des canaux (2).

9. Structure pour la culture des plantes selon l'une des revendications 1 à 8, caractérisée en ce que les parois (20) des canaux, ou les couches (201...212 ; 41 à 43) sont en un papier de pâte de cellulose ou de pâte mécanique, doux et spongieux.

10. Structure pour la culture des plantes selon l'une des revendications 1 à 9, caractérisée en ce que les couches ondulées (201...212) sont disposées et conçues de telle sorte que la structure (1) présente, avec une réduction de la section transversale des canaux, une forme plate, auquel cas les couches ondulées sont en un matériau qui, du fait de la force élastique et de rappel, laquelle en particulier n'est immanente qu'à l'état humide, peut être dressé avec formation des canaux (2).

11. Structure pour la culture des plantes selon l'une des revendications 1 à 10, caractérisée en ce que les parois (20) des canaux sont en un matériau qui gonfle en présence d'humidité.

12. Structure pour la culture des plantes selon l'une des revendications 1 à 11, caractérisée en ce que les couches ondulées (201...212) se suivent en position horizontale ou sont empilées perpendiculairement à l'extension verticale (16) de la structure (1).

13. Structure pour la culture des plantes selon l'une des revendications 1 à 12, caractérisée en ce que les canaux (2) sont, au moins partiellement, remplis d'un matériau de culture (6) favorisant l'enracinement, comme de la terre, de la tourbe ou analogue.

14. Structure pour la culture des plantes selon l'une des revendications 1 à 13, caractérisée en ce qu'il comporte des trous ou des perforations en forme de fente (13, 14), partant de l'un des côtés (12) de la structure, prévu pour recevoir la plante (5), et s'étendant d'une manière essentiellement verticale dans la structure (1).

Fig.1

Fig.2

Fig.3

Fig.4

Fig.5

Fig. 6